# EUROPÄISCHE PATENTSCHRIFT

(11) **EP 4 007 710 B1**
(45) Veröffentlichungstag und Bekanntmachung des Hinweises auf die Patenterteilung: **27.09.2023**
(21) Anmeldenummer: 20764015.2
(22) Anmeldetag: 12.08.2020
(51) Int. Cl.: B60N 2/00, B61D 41/00

(54) **ANZEIGE EINES BESETZTEN UND NICHT-BESETZTEN SITZES IN EINEM FAHRZEUG ZUR PERSONENBEFÖRDERUNG**
DISPLAY OF AN OCCUPIED AND UNOCCUPIED SEAT IN A VEHICLE FOR TRANSPORTING PASSENGERS
AFFICHAGE D'UN SIÈGE OCCUPÉ ET INOCCUPÉ DANS UN VÉHICULE POUR TRANSPORT DE PASSAGERS

(30) Priorität: 12.09.2019 DE 102019213946
(43) Veröffentlichungstag der Anmeldung: 08.06.2022
(73) Patentinhaber: Siemens Mobility GmbH, 81739 München (DE)
(72) Erfinder: DAHMEN, Anne-Christin, 38162 Cremlingen (DE)
(74) Vertreter: Siemens Patent Attorneys
(86) Internationale Anmeldenummer: PCT/EP2020/072595
(87) Internationale Veröffentlichungsnummer: WO 2021/047850

(56) Entgegenhaltungen:
- DE-A1-102010 033 624
- DE-A1-102014 209 554
- US-B1- 10 391 972

## Beschreibung

Die Erfindung betrifft eine Vorrichtung und ein Verfahren zum Anzeigen einer Besetzung eines Sitzes in einem Fahrzeug zur Personenbeförderung.

Aus der WO 2014/044610 A1 ist es bekannt, einen Sensor zur Ermittlung der Belegung eines Sitzes in einem Schienenfahrzeug zu verwenden. Ein Belegungsstatus eines Satzes von Sitzen in dem Schienenfahrzeug wird bereitgestellt. Dazu detektiert eine zentrale Einheit Daten, die eine Identifikation und Position eines Schalters des jeweiligen Sitzes repräsentierten. Anhand der Daten wird der jeweilige Sitz als "besetzt" markiert.

Das US-Patent US 10,391,972 B1 beschreibt einen Sitzaufbau mit einem Sitzgurt, bei dem mittels eines Anzeigeelements am Rücken der Sitzlehne angezeigt wird, ob eine den Sitz belegende Person den Sitzgurt geschlossen bzw. angelegt hat.

Die deutsche Patentanmeldung DE 10 2014 209 554 A1 beschreibt ein Verfahren zur Leitung eines Fahrgastes zu einem in einem Fahrzeug angeordneten Fahrgastplatz. Dabei werden Belegungszustände von Fahrgastplätzen ermittelt und der Fahrgast zu einem unbelegten Fahrgastplatz geleitet.

Die deutsche Patentanmeldung DE 10 2010 033 624 A1 beschreibt ein Sitzplatzbelegungserkennungssystem für ein Kraftfahrzeug mit einer Mehrzahl an Kraftfahrzeugsitzen. Dabei ist in jedem Kraftfahrzeugsitz ein Erfassungsmittel angeordnet, das dazu eingerichtet und vorgesehen ist, zu erfassen, ob der zugeordnete Kraftfahrzeugsitz bestimmungsgemäß mit einer Person belegt ist. Eine Steuereinrichtung zum Leiten von Personen, die das Kraftfahrzeug betreten, ist dazu eingerichtet und vorgesehen, in Zusammenwirkung mit den Erfassungsmitteln über ein Anzeigemittel anzuzeigen, welche der Mehrzahl an Kraftfahrzeugsitzen bestimmungsgemäß belegt sind und/oder nicht belegt sind.

Vor diesem Hintergrund ist es Aufgabe der Erfindung, den Fahrkomfort für Fahrgäste eines Fahrzeugs zur Personenbeförderung zu erhöhen und die Anzeige der Besetzung des Sitzes in dem Fahrzeug zu verbessern.

Diese Aufgabe wird durch eine Vorrichtung zum Anzeigen einer Besetzung eines Sitzes in einem Fahrzeug zur Personenbeförderung gelöst. Die Vorrichtung umfasst ein Anzeigeelement, welches an dem Sitz angeordnet ist. Das Anzeigeelement ist ausgebildet, einen ersten Zustand, in welchem das Anzeigeelement den Sitz als nicht-besetzt anzeigt, einzunehmen. Das Anzeigeelement ist weiter ausgebildet, einen zweiten Zustand, in welchem das Anzeigeelement den Sitz als besetzt anzeigt, einzunehmen. Die Vorrichtung umfasst weiter eine Sitzfläche des Sitzes, welche für eine Besetzung durch eine Person oder einen Gegenstand vorgesehen ist, und eine Wirkverbindung zwischen der Sitzfläche und dem Anzeigeelement, die ausgebildet ist, bei Besetzen des Sitzes ein Einnehmen des zweiten Zustands zu bewirken.

Mit der Erfindung wurde erkannt, dass Fahrgäste bei einem Blick in einen Fahrgastraum, insbesondere einen sogenannten Großraum, häufig nicht in der Lage sind, zu erkennen, welche Sitze des Fahrgastraums belegt sind. Dies liegt zum einen daran, dass ein Teil der Sitze dem Fahrgast (in Blickrichtung) abgewandt ist. Bei diesem Teil der Sitze ist für den Fahrgast häufig nicht erkennbar, ob ein Sitz besetzt ist (da die Sitzlehne die Sicht verdeckt). Auch bei Sitzen, die dem Fahrgast (in Blickrichtung) zugewandt sind, ist für den Fahrgast häufig nicht erkennbar, ob ein Sitz durch einen Gegenstand (z.B. ein Gepäckstück) oder durch eine schlafende, zusammengesunkene Person besetzt ist (da andere Sitze die Sicht verdecken). Somit ist es bisher erforderlich, dass der Fahrgast durch den Fahrgastraum läuft, um freie (d.h. nicht besetzte) Sitze zu suchen. Insbesondere bei hoch ausgelasteten Fahrzeugen und aufgrund der Tatsache, dass Fahrgäste häufig Gepäck mit sich führen, ist die Suche nach freien Sitzplätzen bei bisherigen Fahrzeugen beschwerlich.

Die erfindungsgemäße Lösung behebt dieses Problem, indem das Anzeigeelement durch das Besetzen des Sitzes in den zweiten Zustand versetzt wird und den Sitz als besetzt anzeigt. Durch die Anordnung des Anzeigeelements an dem Sitz kann die Information über den aktuellen Besetzungszustand dem Sitz durch einfaches Hinsehen gedanklich zugeordnet werden. Ein Fahrgast, der einen freien Sitzplatz sucht, wird dadurch in die Lage versetzt, anhand eines kurzen Blicks in den Fahrgastraum zu ermitteln, welche Sitze belegt und welche Sitze frei sind. Auf dieser Basis kann der Fahrgast zügig entscheiden, ob ein Begehen des Fahrgastraums zweckmäßig ist oder ob der Fahrgastraum ohne nähere Betrachtung passiert oder bei der Suche nach einem freien Sitzplatz ausgelassen werden kann. Beispielsweise kann der Fahrgast entscheiden, die Suche in einer anderen Richtung fortzusetzen.

Die Formulierung "Anzeigen einer Besetzung eines Sitzes" ist dahingehend zu verstehen, dass ein besetzter Sitz (wenn das Anzeigeelement den zweiten Zustand einnimmt) und zudem ein nicht-besetzter Sitz (wenn das Anzeigeelement den ersten Zustand einnimmt) kenntlich gemacht werden kann.

Das Fahrzeug zur Personenbeförderung ist vorzugsweise ein Fahrzeug zur Beförderung von Personen im öffentlichen Nah- und/oder Fernverkehr.

Die Sitzfläche ist vorzugsweise eine elastische Sitzfläche, die sich bei einem Besetzen des Sitzplatzes absenkt. Weiter vorzugsweise wird die Elastizität durch eine Polsterung und/oder Federung der Sitzfläche erzielt.

Bei einer bevorzugten Ausführungsform der erfindungsgemäßen Vorrichtung ist das Fahrzeug ein spurgebundenes Fahrzeug, insbesondere ein Doppelstockzug.

Die erfindungsgemäße Vorrichtung ist insbesondere für spurgebundene Fahrzeuge besonders zweckmäßig, da die Suche nach freien Sitzplätzen bei hoch ausgelasteten spurgebundenen Fahrzeugen eine Belastung für Fahrgäste darstellt. Zum einen müssen die nach einem freien Sitzplatz suchenden Fahrgäste ihr Gepäck durch die in der Regel engen Gänge des Fahrzeugs tragen. Auch die bereits sitzenden Fahrgäste werden durch die nach einem freien Sitzplatz suchenden Fahrgäste behindert, beispielsweise beim Aufsuchen einer sanitären Anlage oder eines Bordrestaurants.

Besonders vorteilhaft ist die erfindungsgemäße Vorrichtung zudem bei Doppelstockzügen: Nach der Feststellung (durch einen kurzen Blick in den Fahrgastraum), dass in einem unteren bzw. oberen Fahrgastraum kein Sitzplatz frei ist, kann dieser Fahrgastraum ausgelassen und die Suche nach einem freien Sitzplatz im oberen bzw. unteren Fahrgastraum fortgesetzt werden.

Der Fachmann versteht den Begriff "Doppelstockzug" als ein spurgebundenes Fahrzeug, welches zumindest in einem Teilbereich doppelstöckig ausgebildet ist. Beispielsweise handelt es sich um einen Verbund aus einer Lok und mehreren Doppelstockwaggons. Alternativ ist der Doppelstockzug beispielsweise ein Doppelstocktriebzug.

Bei einer weiteren bevorzugten Ausführungsform der erfindungsgemäßen Vorrichtung ist das Anzeigeelement an einer Sitzlehne des Sitzes, insbesondere im oberen Bereich der Sitzlehne angeordnet. Durch diese Art der Anordnung ist das Anzeigeelement gut sichtbar, insbesondere bei einem kurzen Blick über die Sitze des Fahrgastraums hinweg.

Gemäß der erfindungsgemäßen Vorrichtung umfasst die Wirkverbindung eine mechanische Hebelvorrichtung. Dies stellt eine besonders einfache und zweckmäßige Wirkverbindung dar.

Ferner umfasst die Hebelvorrichtung erfindungsgemäß einen auf einem Drehpunkt gelagerten Hebelarm. Der Drehpunkt ist fest mit dem Sitz verbunden. Der Hebelarm ist derart auf dem Drehpunkt gelagert, dass ein erstes Hebelende des Hebelarms bei einem Besetzen des Sitzes abgesenkt wird und ein zweites Hebelende des Hebelarms angehoben wird. Das zweite Hebelende ist mit einem Armelement verbunden, welches ausgebildet ist, das Anzeigeelement beim Anheben des zweiten Hebelendes in den zweiten Zustand zu bewegen. Dies ist konstruktiv besonders aufwandsarm realisierbar.

Das Armelement ist vorzugsweise gelenkig mit dem zweiten Hebelende verbunden. Insbesondere ist das Armelement an einem ersten Armende gelenkig mit dem zweiten Hebelende verbunden. Zudem ist das Armelement an einem zweiten Armende fest mit dem Anzeigeelement verbunden.

Bei einer alternativen bevorzugten Ausführungsform der erfindungsgemäßen Vorrichtung umfasst die Wirkverbindung eine elektronische, insbesondere datentechnische Verbindung.

Die datentechnische Verbindung kann eine drahtlose Verbindung sein und ist vorzugsweise eine drahtgebundene Verbindung. Über die datentechnische Verbindung kann ein Besetzungssignal übertragen werden. In Abhängigkeit davon, ob das Besetzungssignal eine Besetzung des Sitzes repräsentiert, wird das Anzeigeelement in den zweiten Zustand versetzt.

Nach einer bevorzugten Weiterbildung ist mittels eines Sensorelements erfassbar, ob die Sitzfläche besetzt ist. In Abhängigkeit der Erfassung des Sensorelements wird die Besetzung des Sitzes mittels des Anzeigeelements angezeigt. Vorzugsweise wird auf Basis der Erfassung des Sensorelements ein Besetzungssignal erzeugt, welches über die datentechnische Verbindung an das Anzeigeelement übertragen wird.

Nach einer weiteren bevorzugten Ausführungsform der erfindungsgemäßen Vorrichtung ist das Anzeigeelement als verschieblich gelagertes Kartenelement ausgebildet. Diese Ausführungsform ist besonders einfach und zweckmäßig. Das Kartenelement ist vorzugsweise rötlich gefärbt.

Vorzugsweise ist das Kartenelement relativ zum Sitz, insbesondere relativ zur Sitzlehne, verschieblich gelagert.

Bei einer bevorzugten Weiterbildung ragt das Anzeigeelement in dem zweiten Zustand zumindest abschnittsweise sichtbar aus der Sitzlehne des Sitzes heraus. In dem ersten Zustand ist das Anzeigeelement in die Sitzlehne eingeschoben.

Bei einer weiteren alternativen Ausführungsform der erfindungsgemäßen Vorrichtung ist das Anzeigeelement ein elektronisches Anzeigeelement.

Beispielsweise leuchtet das Anzeigeelement im zweiten Zustand. Vorzugsweise ist das Anzeigeelement ein Displayelement, welches in dem zweiten Zustand eine Besetzungsinformation anzeigt, und in dem ersten Zustand keine Besetzungsinformation oder eine Information, die einen freien Sitzplatz repräsentiert, anzeigt.

Die Erfindung betrifft ferner eine Sitzvorrichtung, umfassend: eine Vorrichtung der vorstehend beschriebenen Art. Die Erfindung betrifft ferner ein spurgebundenes Fahrzeug, insbesondere einen Doppelstockzug, umfassend: eine Anordnung von Sitzvorrichtungen der vorstehend beschriebenen Art.

Die Erfindung betrifft ferner ein Verfahren zum Anzeigen einer Besetzung eines Sitzes in einem Fahrzeug zur Personenbeförderung, wobei ein Anzeigeelement an dem Sitz angeordnet ist, umfassend:
- Einnehmen eines ersten Zustands, in welchem das Anzeigeelement einen nicht-besetzten Sitz anzeigt,
- Besetzen einer Sitzfläche des Sitzes durch eine Person oder einen Gegenstand, und
- Einnehmen eines zweiten Zustands, in welchem das Anzeigeelement den Sitz als besetzt anzeigt,
wobei das Einnehmen des zweiten Zustands mittels einer Wirkverbindung zwischen der Sitzfläche und dem Anzeigeelement bewirkt wird.

Zu Vorteilen, Ausführungsformen und Ausführungsdetails der Merkmale der erfindungsgemäßen Sitzvorrichtung, des erfindungsgemäßen spurgebundenen Fahrzeugs und des erfindungsgemäßen Verfahrens kann auf die obige Beschreibung zu den entsprechenden Merkmalen der erfindungsgemäßen Vorrichtung verwiesen werden.

Ausführungsbeispiele der Erfindung werden im Folgenden anhand der Zeichnungen erläutert. Es zeigen:
- Figur 1: eine schematische Seitenansicht eines ersten Ausführungsbeispiels eines spurgebundenen Fahrzeugs,
- Figur 2: eine schematische Seitenansicht eines ersten Ausführungsbeispiels einer Sitzvorrichtung des in Figur 1 gezeigten spurgebundenen Fahrzeugs, bei der ein Anzeigeelement einen ersten Zustand einnimmt,
- Figur 3: eine schematische Seitenansicht des in Figur 1 gezeigten ersten Ausführungsbeispiels der Sitzvorrichtung, bei der das Anzeigeelement einen zweiten Zustand einnimmt,
- Figur 4: eine schematische Frontansicht der in den Figuren 2 und 3 gezeigten Sitzvorrichtung, bei der das Anzeigeelement den zweiten Zustand einnimmt, und
- Figur 5: eine schematische Seitenansicht eines zweiten Ausführungsbeispiels einer Sitzvorrichtung, bei der ein Anzeigeelement einen zweiten Zustand einnimmt.

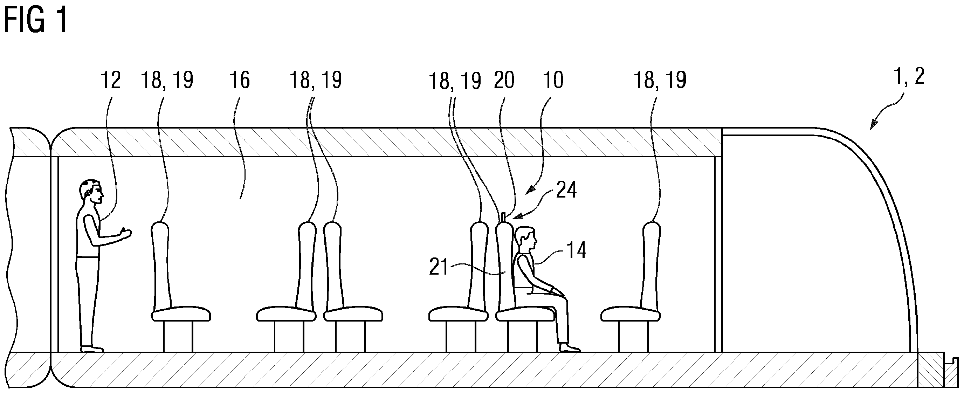

Figur 1 zeigt ein spurgebundenes Fahrzeug 1 in einer schematischen Seitenansicht mit einer erfindungsgemäßen Vorrichtung 10. Das spurgebundene Fahrzeug 1 ist ein Schienenfahrzeug 2, welches zur Beförderung von Fahrgästen 12, 14 dient.

Das spurgebundene Fahrzeug 1 weist einen Fahrgastbereich 16 auf, welcher für den Aufenthalt der Fahrgäste 12 und 14 vorgesehen ist. Innerhalb des Fahrgastbereichs 16 sind mehrere Sitzvorrichtungen 18, insbesondere Sitze 19, angeordnet. Die Sitzvorrichtungen 18 weisen jeweils die Vorrichtung 10 auf.

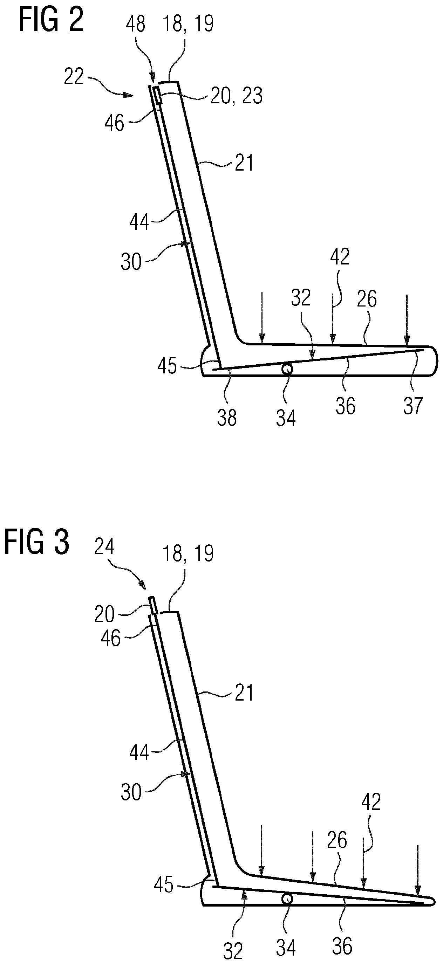

Die Sitzvorrichtungen 18 weisen jeweils ein Anzeigeelement 20 auf, welches an dem Sitz 19 nämlich im oberen Bereich der Sitzlehne 21 angeordnet ist. Das Anzeigeelement 20 kann einen ersten Zustand 22 (siehe Figur 2) einnehmen, in welchem der Sitz 19 mittels des Anzeigeelements 20 als nicht-besetzt angezeigt ist. Das Anzeigeelement 20 kann zudem einen zweiten Zustand 24 (siehe Figur 3) einnehmen, in welchem der Sitz 19 mittels des Anzeigeelements 20 als besetzt angezeigt ist.

Figur 2 zeigt eine der Sitzvorrichtungen 18, bei welcher das Anzeigeelement 20 als verschieblich gelagertes Kartenelement 23 ausgebildet ist und den ersten Zustand 22 einnimmt.

Der Sitz 19 weist eine Sitzfläche 26 auf, die für eine Besetzung durch eine Person (beispielsweise den Fahrgast 14) und/oder einen Gegenstand (nicht gezeigt) vorgesehen ist.

Die Vorrichtung 10 umfasst eine Wirkverbindung 30 zwischen der Sitzfläche 26 und dem Anzeigeelement 20. Die Wirkverbindung 30 ist ausgebildet, ein Einnehmen des zweiten Zustands 24 zu bewirken, wenn der Sitz 19 besetzt wird.

Die Wirkverbindung 30 ist in dem in Figur 2 gezeigten ersten Ausführungsbeispiel eine mechanische Hebelvorrichtung 32, welche einen auf einem Drehpunkt 34 gelagerten Hebelarm 36 umfasst. Der Drehpunkt 34 ist fest mit dem Sitz 19 verbunden.

Der Hebelarm 36 weist ein erstes Hebelende 37 und ein zweites Hebelende 38 auf. Wird der Sitz 19 besetzt und dabei eine Kraft 42 auf die Sitzfläche 26 ausgeübt, führt dies zu einem Absenken des ersten Hebelendes 37. Durch die Lagerung auf dem Drehpunkt 34 wird beim Absenken des ersten Hebelendes 37 das zweite Hebelende 38 angehoben.

Das zweite Hebelende 38 ist gelenkig mit einem Armelement 44 verbunden. Insbesondere ist das Armelement 44 an einem ersten Armende 45 gelenkig mit dem zweiten Hebelende 38 verbunden. Zudem ist das Armelement 44 an einem zweiten Armende 46 fest mit dem Anzeigeelement 20 verbunden. Wenn sich das zweite Hebelende 38 anhebt, bewirkt dies, dass sich das Anzeigeelement 20 in den zweiten Zustand 24 bewegt. Dabei wird das Anzeigeelement 20 aus einer oberen Öffnung 48 des Sitzes 19, insbesondere der Sitzlehne 21, herausgeschoben bzw. herausgedrückt.

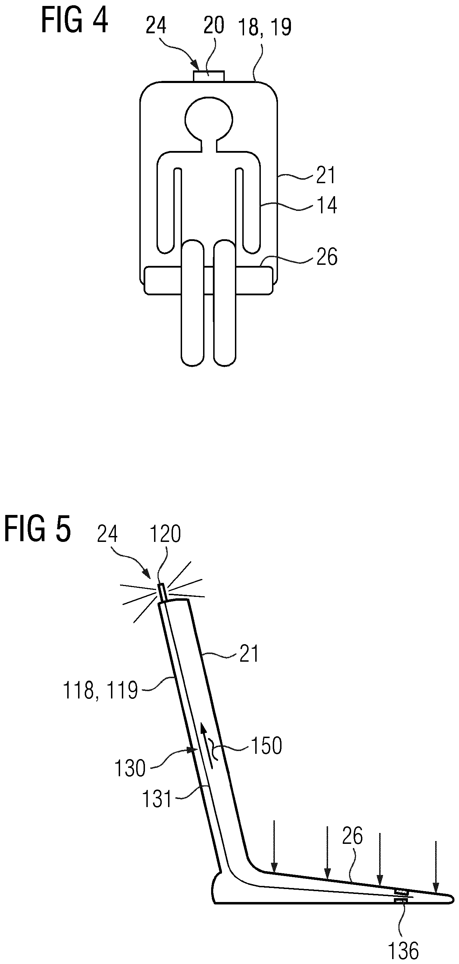

Figur 3 zeigt das Anzeigeelement 20 in dem zweiten Zustand 24, in dem es aus der oberen Öffnung 48 herausgeschoben bzw. herausgedrückt ist. Figur 4 zeigt eine Frontansicht des Sitzes 19, welcher von dem Fahrgast 14 besetzt ist und bei dem das Anzeigeelement 20 den zweiten Zustand 24 einnimmt.

Figur 5 zeigt ein zweites Ausführungsbeispiel einer Sitzvorrichtung 118 in einem zweiten Zustand 24. Bei diesem Ausführungsbeispiel wird mittels eines Sensorelements 136 erfasst, ob die Sitzfläche 26 besetzt ist. Über eine datentechnische Verbindung 131, die als Wirkverbindung 130 vorgesehen ist, wird ein Besetzungssignal 150 an das Anzeigeelement 120 übertragen. In Abhängigkeit davon, ob das Besetzungssignal 150 eine Besetzung des Sitzes 119 repräsentiert, wird das Anzeigeelement 120 in den zweiten Zustand 24 versetzt.

Das Anzeigeelement 120 ist ein elektronisches Anzeigeelement, welches beispielsweise im zweiten Zustand 24 leuchtet und im ersten Zustand 22 nicht leuchtet. Alternativ kann das Anzeigeelement 120 ein Displayelement sein, welches in dem zweiten Zustand 24 eine Besetzungsinformation anzeigt, und in dem ersten Zustand 22 keine Besetzungsinformation oder eine Information, die einen freien Sitzplatz repräsentiert, anzeigt.

Obwohl die Erfindung anhand von Ausführungsbeispielen detailliert dargestellt und beschrieben wurde, ist die Erfindung nicht auf die offenbarten Ausführungsbeispiele und die darin erläuterten konkreten Merkmalskombinationen beschränkt. Weitere Variationen der Erfindung können von einem Fachmann hieraus abgeleitet werden, ohne den Schutzumfang der beanspruchten Erfindung zu verlassen.

## Patentansprüche

1. Vorrichtung zum Anzeigen einer Besetzung eines Sitzes (19) in einem Fahrzeug (1) zur Personenbeförderung, umfassend:
- ein Anzeigeelement (20, 120), welches an dem Sitz (19) angeordnet ist und welches ausgebildet ist,
o einen ersten Zustand (22), in welchem das Anzeigeelement (20, 120) den Sitz (19) als nicht-besetzt anzeigt, und
o einen zweiten Zustand (24), in welchem das Anzeigeelement (20, 120) den Sitz (19) als besetzt anzeigt,
einzunehmen,
- eine Sitzfläche (26) des Sitzes (19), welche für eine Besetzung durch eine Person (14) oder einen Gegenstand vorgesehen ist, und
- eine Wirkverbindung (30, 130) zwischen der Sitzfläche (26) und dem Anzeigeelement (20, 120), welche ausgebildet ist, bei Besetzen des Sitzes (19) ein Einnehmen des zweiten Zustands (24) zu bewirken,
**dadurch gekennzeichnet** in dass
die Wirkverbindung (30) eine mechanische Hebelvorrichtung (32) umfasst und die Hebelvorrichtung (32) einen auf einem Drehpunkt (34) gelagerten Hebelarm (36) umfasst und der Drehpunkt (34) fest mit dem Sitz (19) verbunden ist, wobei der Hebelarm (36) derart auf dem Drehpunkt (34) gelagert ist, dass ein erstes Hebelende (37) des Hebelarms (36) bei einem Besetzen des Sitzes (19) abgesenkt wird und ein zweites Hebelende (38) des Hebelarms (36) angehoben wird, und wobei das zweite Hebelende (38) mit einem Armelement (44) verbunden ist, welches ausgebildet ist, das Anzeigeelement (20) beim Anheben des zweiten Hebelendes (38) in den zweiten Zustand (24) zu bewegen.

2. Vorrichtung nach Anspruch 1,
bei welcher das Fahrzeug ein spurgebundenes Fahrzeug (1), insbesondere ein Doppelstockzug, ist.

3. Vorrichtung nach Anspruch 1 oder 2,
bei welcher das Anzeigeelement (20, 120) an einer Sitzlehne (21) des Sitzes (19), insbesondere im oberen Bereich der Sitzlehne (21) angeordnet ist.

4. Vorrichtung nach wenigstens einem der vorhergehenden Ansprüche,
bei welcher das Anzeigeelement (20) als verschieblich gelagertes Kartenelement (23) ausgebildet ist.

5. Vorrichtung nach Anspruch 3 und 4,
bei welcher das Anzeigeelement (20) in dem zweiten Zustand (24) zumindest abschnittsweise sichtbar aus der Sitzlehne (21) des Sitzes (19) herausragt und in dem ersten Zustand (22) in die Sitzlehne (21) eingeschoben ist.

6. Vorrichtung nach wenigstens einem der vorhergehenden Ansprüche 1 bis 3,
bei welcher das Anzeigeelement (120) ein elektronisches Anzeigeelement ist.

7. Sitzvorrichtung, umfassend: eine Vorrichtung nach einem der Ansprüche 1 bis 6.

8. Spurgebundenes Fahrzeug, insbesondere Doppelstockzug, umfassend: eine Anordnung von Sitzvorrichtungen (18, 118) nach Anspruch 7.

9. Verfahren zum Anzeigen einer Besetzung eines Sitzes (19) in einem Fahrzeug (1) zur Personenbeförderung, wobei ein Anzeigeelement (30) an dem Sitz (19) angeordnet ist, umfassend:
- Einnehmen eines ersten Zustands (22), in welchem das Anzeigeelement (20) einen nicht-besetzten Sitz (19) anzeigt,
- Besetzen einer Sitzfläche (26) des Sitzes (19) durch eine Person (14) oder einen Gegenstand, und
- Einnehmen eines zweiten Zustands (24), in welchem das Anzeigeelement (20) den Sitz (19) als besetzt anzeigt,
wobei das Einnehmen des zweiten Zustands (24) mittels einer Wirkverbindung (30, 130) zwischen der Sitzfläche und dem Anzeigeelement (20, 120) bewirkt wird, **dadurch gekennzeichnet** in dass die Wirkverbindung (30) eine mechanische Hebelvorrichtung (32) umfasst und die Hebelvorrichtung (32) einen auf einem Drehpunkt (34) gelagerten Hebelarm (36) umfasst und der Drehpunkt (34) fest mit dem Sitz (19) verbunden ist, wobei der Hebelarm (36) derart auf dem Drehpunkt (34) gelagert ist, dass ein erstes Hebelende (37) des Hebelarms (36) bei einem Besetzen des Sitzes (19) abgesenkt wird und ein zweites Hebelende (38) des Hebelarms (36) angehoben wird, und wobei das zweite Hebelende (38) mit einem Armelement (44) verbunden ist, welches ausgebildet ist, das Anzeigeelement (20) beim Anheben des zweiten Hebelendes (38) in den zweiten Zustand (24) zu bewegen.

## Claims

1. Apparatus for indicating an occupancy of a seat (19) in a vehicle (1) for passenger transport, comprising:
- an indication element (20, 120), which is arranged on the seat (19) and which is embodied
o to adopt a first state (22), in which the indication element (20, 120) indicates the seat (19) as unoccupied, and
o to adopt a second state (24), in which the indication element (20, 120) indicates the seat (19) as occupied,
- a seat surface (26) of the seat (19), which is provided for occupancy by a person (14) or an object, and
- an active connection (30, 130) between the seat surface (26) and the indication element (20, 120), which is embodied to cause the second state (24) to be adopted when the seat (19) is occupied, **characterised in that**
the active connection (30) comprises a mechanical lever apparatus (32) and the lever apparatus (32) comprises a lever arm (36) mounted at a point of rotation (34) and the point of rotation (34) is permanently connected to the seat (19),
wherein the lever arm (36) is mounted at the point of rotation (34) in such a manner that a first lever end (37) of the lever arm (36) is lowered when the seat (19) is occupied and a second lever end (38) of the lever arm (36) is raised, and
wherein the second lever end (38) is connected to an arm element (44), which is embodied to move the indication element (20) into the second state (24) when the second lever end (38) is raised.

2. Apparatus according to claim 1,
in which the vehicle is a rail-bound vehicle (1), in particular a double-deck train.

3. Apparatus according to claim 1 or 2,
in which the indication element (20, 120) is arranged on a backrest (21) of the seat (19), in particular in the upper region of the backrest (21).

4. Apparatus according to at least one of the preceding claims,
in which the indication element (20) is embodied as a displaceably mounted map element (23).

5. Apparatus according to claim 3 and 4,
in which the indication element (20) in the second state (24) protrudes out from the backrest (21) of the seat (19) in a visible manner, at least in sections, and in the first state (22) is slid into the backrest (21).

6. Apparatus according to at least one of the preceding claims 1 to 3,
in which the indication element (120) is an electronic indication element.

7. Seat apparatus, comprising: an apparatus according to one of claims 1 to 6.

8. Rail-bound vehicle, in particular double-deck train,
comprising: an arrangement of seat apparatuses (18, 118) according to claim 7.

9. Method for indicating an occupancy of a seat (19) in a vehicle (1) for passenger transport, wherein an indication element (30) is arranged on the seat (19), comprising:
- adopting of a first state (22), in which the indication element (20) indicates an unoccupied seat (19),
- occupancy of a seat surface (26) of the seat (19) by a person (14) or an object, and
- adopting of a second state (24), in which the indication element (20) indicates the seat (19) as occupied,
wherein the adopting of the second state (24) is caused by means of an active connection (30, 130) between the seat surface and the indication element (20, 120), **characterised in that** the active connection (30) comprises a mechanical lever apparatus (32) and the lever apparatus (32) comprises a lever arm (36) mounted at a point of rotation (34) and the point of rotation (34) is permanently connected to the seat (19),
wherein the lever arm (36) is mounted at the point of rotation (34) in such a manner that a first lever end (37) of the lever arm (36) is lowered when the seat (19) is occupied and a second lever end (38) of the lever arm (36) is raised, and wherein the second lever end (38) is connected to an arm element (44), which is embodied to move the indication element (20) into the second state (24) when the second lever end (38) is raised.

## Revendications

1. Dispositif d'indication qu'un siège (19) d'un véhicule (1) de transport des passagers est occupé, comprenant :
- un élément (20, 120) d'indication, qui est monté sur le siège (19) et qui est constitué pour prendre
o un premier état (22), dans lequel l'élément (20, 120) d'indication indique que le siège (19) est inoccupé, et
o un deuxième état (24), dans lequel l'élément (20, 120) d'indication indique que le siège (19) est occupé,
- une surface (26) d'assise du siège (19), qui est prévue pour une occupation par une personne (14) ou par un objet, et
- une liaison (30, 130) d'action entre la surface (26) d'assise et l'élément (20, 120) d'indication, qui est constituée pour faire que, lorsque le siège (19) est occupé, le deuxième état (24) soit pris, **caractérisé en ce que**
la liaison (30) d'action comprend un dispositif (32) mécanique à levier et le dispositif (32) à levier comprend un bras (36) de levier monté sur un point (34) d'appui, et le point (34) d'appui est relié rigidement au siège (19), dans lequel le bras (36) du levier est monté sur le point (34) d'appui, de manière à ce qu'une première extrémité (37) du levier du bras (36) du levier soit abaissée, lorsque le siège (19) est occupé, et de manière à ce qu'une deuxième extrémité (38) du levier du bras (36) du levier soit soulevée, et dans lequel la deuxième extrémité (38) du levier est reliée à un élément (44) de bras, qui est constitué pour mettre l'élément (20) d'indication dans le deuxième état (24), lorsque la deuxième extrémité (38) du levier est soulevée.

2. Dispositif suivant la revendication 1,
dans lequel le véhicule est un véhicule (1) guidé sur rail, en particulier un train à deux niveaux.

3. Dispositif suivant la revendication 1 ou 2,
dans lequel l'élément (20, 120) d'indication est monté sur un dossier (21) du siège (19), en particulier dans la partie supérieure du dossier (21) du siège.

4. Dispositif suivant au moins l'une des revendications précédentes,
dans lequel l'élément (20) d'indication est constitué sous la forme d'un élément (23) de carte monté coulissant.

5. Dispositif suivant la revendication 3 et 4,
dans lequel l'élément (20) d'indication fait, dans le deuxième état (24), saillie au moins par endroits, de manière visible, du dossier (21) du siège (19) et est, dans le premier état (22), escamoté dans le dossier (21) du siège.

6. Dispositif suivant l'une des revendications 1 à 3 précédentes,
dans lequel l'élément (120) d'indication est un élément d'indication électronique.

7. Dispositif de siège, comprenant : un dispositif suivant l'une des revendications 1 à 6.

8. Véhicule guidé sur rail, en particulier train à deux niveaux, comprenant : un agencement de dispositifs (18, 118) de siège suivant la revendication 7.

9. Procédé pour indiquer qu'un siège (19) d'un véhicule (1) de transport des passagers est occupé, dans lequel un élément (30) d'indication est monté sur le siège (19), comprenant :
- la prise d'un premier état (22), dans lequel l'élément (20) d'indication indique un siège (19) inoccupé,
- l'occupation d'une surface (26) d'assise du siège (19) par une personne (14) ou par un objet, et
- la prise d'un deuxième état (24), dans lequel l'élément (20) d'indication indique que le siège (19) est occupé,
dans lequel la prise du deuxième état (24) se fait au moyen d'une liaison (30, 130) d'action entre la surface d'assise et l'élément (20, 120) d'indication, **caractérisé en ce que** la liaison (30) d'action comprend un dispositif (32) mécanique à levier et le dispositif (32) à levier comprend un bras (36) de levier monté sur un point (34) d'appui, et le point (34) d'appui est relié rigidement au siège (19), dans lequel le bras (36) du levier est monté sur le point (34) d'appui, de manière à ce qu'une première extrémité (37) du levier du bras (36) du levier soit abaissée, lorsque le siège (19) est occupé, et de manière à ce qu'une deuxième extrémité (38) du levier du bras (36) du levier soit soulevée, et dans lequel la deuxième extrémité (38) du levier est reliée à un élément (44) de bras, qui est constitué pour mettre l'élément (20) d'indication dans le deuxième état (24), lorsque la deuxième extrémité (38) du levier est soulevée.
